# EUROPÄISCHE PATENTSCHRIFT

(11) **EP 0 717 688 B1**
(45) Veröffentlichungstag und Bekanntmachung des Hinweises auf die Patenterteilung: **09.06.1999**
(21) Anmeldenummer: 94927516.8
(22) Anmeldetag: 31.08.1994
(51) Int. Cl.: B60S 1/34

(54) **WISCHARM**
WIPER ARM
BRAS DE MONTURE D'ESSUIE-GLACE

(30) Priorität: 17.09.1993 DE 4331602
(43) Veröffentlichungstag der Anmeldung: 26.06.1996
(73) Patentinhaber: ITT Automotive Europe GmbH, 60488 Frankfurt am Main (DE)
(72) Erfinder: SCHILL, Eduard, D-75446 Wiernsheim (DE); SCHMID, Eckhardt, D-74336 Brackenheim (DE); WAIBLE, Siegfried, D-74223 Flein (DE); BOMMER, Jürgen, D-71732 Tamm (DE)
(74) Vertreter: Dreiss, Fuhlendorf, Steimle & Becker
(86) Internationale Anmeldenummer: EP9402875
(87) Internationale Veröffentlichungsnummer: WO9507830

(56) Entgegenhaltungen:
- WO-A-93/09980
- DE-B- 1 276 483

## Beschreibung

Die Erfindung betrifft einen Wischarm, insbesondere für eine Scheibenreinigungsanlage eines Fahrzeuges, gemäß den Merkmalen aus dem Oberbegriff des Anspruchs 1.

Im heutigen Automobilbau ist es üblich, daß Scheibenwischeranlagen derart in die Fahrzeugkarosserie eingebaut sind, daß die Wischerwellen, auf denen die Wischarme befestigt sind, von Karosserieteilen, wie zum Beispiel der Motorhaube, verdeckt sind. Wischarme durchgreifen dann einen relativ schmalen Zwischenraum zwischen der Motorhaube und der Windschutzscheibe, damit die Wischblätter auf der Windschutzscheibe ihre Reinigungsfunktion erfüllen können. Um andererseits ein von Zeit zu Zeit erforderliches Abklappen des Wischarmes von der Windschutzscheibe Zu ermöglichen, wie es beispielsweise für das Auswechseln des Wischblattes sehr nützlich ist, muß sinnvollerweise das Schwenklager außerhalb der Motorhaube liegen. Das wiederum erfordert ein relativ langes Befestigungsteil.

Aus der DE-OS 37 24 777 ist bereits ein Wischarm mit einem relativ langen Befestigungsteil bekannt. Dieses Befestigungsteil ist in einem Druckgußverfahren aus einer Zinklegierung hergestellt und hat im wesentlichen einen U-artig geformten Querschnitt. Es hat einen Rücken, von dem aus sich zwei Seitenwangen in Richtung der zu reinigenden Scheibe erstrecken. Zur Erhöhung der Stabilität verlaufen zwischen den Seitenwangen und dem Rücken diverse Versteifungsrippen. An dem einen Ende ist das Befestigungsteil mit einer Bohrung zur Befestigung auf einer Wischerwelle versehen und am anderen Ende ist über ein Schwenklager ein Gelenkteil befestigt. Das Gelenkteil besteht aus Stahlblech und ist im wesentlichen U-förmig mit einem Rücken und zwei zur zu reinigenden Scheibe weisenden Seitenwangen. Zur Bildung des Schwenklagers ist eine Lagerbuchse in fluchtende Bohrungen in den Seitenwangen des Befestigungsteiles eingesetzt. Im Bereich des Schwenklagers werden die Seitenwangen des Befestigungsteiles außen von Verlängerungen der Seitenwangen des Gelenkteils umfaßt, wobei diese Verlängerungen ebenfalls mit fluchtenden Bohrungen versehen sind. Ein Gelenkbolzen ist in die fluchtenden Bohrungen und die Lagerbuchse eingesetzt und bildet die Schwenkachse.

Da bei den modernen Fahrzeugen recht große Scheiben zu reinigen sind, sind sehr große Anpreßkräfte für das Wischblatt, welches am Ende der am Gelenkteil befestigten Wischstange eingehängt ist, erforderlich. In der DE-OS 37 24 777 werden diese Anpreßkrafte durch zwei parallel angeordnete Zugfedern erzeugt, die einerseits an der Wischstange und andererseits am Befestigungsteil eingehängt sind. Der Wischarm ist also sehr hohen mechanischen Spannungen ausgesetzt, was sich vor allem auf das relativ lange Befestigungsteil aus Zinkdruckguß nachteilig auswirkt. Unter diesen dauernd einwirkenden Spannungen, noch verstärkt bei großer Wärmeeinwirkung in den Sommermonaten, wird das Befestigungsteil übermäßig stark deformiert, was zu Betriebsstörungen führen kann.

Um diesen Nachteil zu beseitigen wurde bereits vorgeschlagen, das Befestigungsteil aus Blech herzustellen. Ein derartiger Wischarm ist aus der DE-OS 41 36 938 (WO-A-93/09980) bekannt. Das Befestigungsteil und das Gelenkteil sind aus Blech hergestellt und haben jeweils im wesentlichen einen U-förmigen Querschnitt, sie haben also einen Rücken und in Richtung der zu reinigenden Scheibe weisende Seitenwangen. Im Bereich des Schwenklagers sind die Seitenwangen des Gelenkteils verlängert und umfassen außen die Seitenwangen des Befestigungsteiles, wobei in diesem Bereich die Seitenwangen von Befestigungsteil und Gelenkteil bzw. deren Verlängerungen mit fluchtenden Bohrungen versehen sind. Die Bohrungen des Befestigungsteiles sind mit einer Lagerbuchse ausgestattet, in der ein Gelenkstift bzw. Gelenkbolzen drehbar gelagert werden kann. Ein Gelenkstift oder Gelenkbolzen ist in die Bohrungen des Gelenkteiles und die Lagerbuchse des Befestigungsteiles eingesetzt und drehfest am Gelenkteil gehalten. Die erforderliche Anpreßkraft wird wiederum durch eine zwischen Wischerstange und Befestigungsteil wirkende Zugfeder erzeugt. Dieser Wischarm hat den wesentlichen Nachteil, daß das Befestigungsteil im Bereich des Schwenklagers schmaler ist als das Gelenkteil, was sich nachteilig auf die Stabilität der Konstruktion, insbesondere im Bereich des Schwenklagers auswirkt.

Außerdem erfordert die Geometrie der Einzelteile bei den beschriebenen Lösungen, daß die Teile des Wischarms vor ihrem Zusammenbau lackiert werden müssen, weil nach dem Zusammenbau relativ große Oberflächenbereiche bei Anwendung kostengünstiger Lackierverfahren nicht erreichbar sind. Andererseits sind beim Zusammenbau der Einzelteile Beschädigungen der Lackschicht nicht auszuschließen, wodurch zumindest ein teilweises Nachlackieren erforderlich wäre.

Aufgabe der Erfindung ist es, einen Wischarm dieser Art so weiterzubilden, daß er über die erforderliche Stabilität verfügt und kostengünstig herstellbar ist.

Erfindungsgemäß wird die Aufgabe durch einen Wischarm mit den Merkmalen des Oberbegriffs des Anspruchs 1 gelöst, bei dem im Bereich des gemeinsamen Schwenklagers von Befestigungsteil und Gelenkteil die Seitenwangen des Gelenkteils bzw. die Verlängerungen dieser Seitenwangen zwischen den Seitenwangen des Befestigungsteiles bzw. den Verlängerungen dieser Seitenwangen angeordnet sind. Mit anderen Worten ausgedrückt, werden im Bereich des Schwenklagers die Seitenwangen des Gelenkteiles bzw. deren Verlängerungen außen von den Seitenwangen bzw. Verlängerungen der Seitenwangen des Befestigungsteiles umfaßt. Damit ist das Befestigungsteil, welches das Drehmoment der Wischerwelle auf das Gelenkteil mit Wischstange überträgt, breiter und somit stabiler als das Gelenkteil. Außerdem wird mit dieser Teilegeometrie die Möglichkeit geschaffen, den Wischarm erst nach dem Zusammenbau der einzelnen Teile zu lackieren. Die Herstellung des Wischarmes wird dadurch kostengünstiger.

Vorteilhaft für die Stabilität des Wischarmes ist es, wenn gemäß Anspruch 2 der Rücken des Befestigungsteiles im wesentlichen über die gesamte Länge des Befestigungsteiles die gleiche Breite besitzt. Dabei wird eine besonders hohe Stabilität des Wischarmes gegenüber den verschiedenen wirkenden Kräften und mechanischen Spannungen erreicht, wenn sowohl das Gelenkteil als auch das Befestigungsteil gemäß Anspruch 3 aus Stahlblech gefertigt sind.

Wird gemäß Anspruch 4 in die fluchtenden Bohrungen des Gelenkteiles im Zusammenhang mit der Bildung des Schwenklagers jeweils eine separate oder eine gemeinsame Lagerbuchse eingesetzt, in welcher dann ein Gelenkstift oder dergleichen drehbar angeordnet werden kann, dann dient diese Maßnahme insbesondere der Verschleißminderung in den Lagerstellen aber auch der Erhöhung der Stabilität des Schwenklagers.

Bei Ausbildung der Seitenwangen des Befestigungsteiles bzw. deren Verlängerungen im Bereich des Schwenklagers als Überdeckungen gemäß Anspruch 5 in einer solchen Art und Weise, daß beim Hochklappen des Wischarmes von der Fahrzeugscheibe im wesentlichen keine Oberflächenbereiche der Seitenwangen des Gelenkteiles bzw. deren Verlängerungen sichtbar werden können, welche in der Ausgangslage von den Überdeckungen verdeckt sind, wird insbesondere die Qualität der nach dem Zusammenbau des Wischarmes erfolgenden Lackierung verbessert. Damit werden ein optimales äußeres Erscheinungsbild des Wischarmes und ein guter Oberflächenschutz erreicht - der Herstellungsaufwand und die Kosten sind dagegen auf keinen Fall größer als bei den bekannten Wischarmen.

Von Vorteil ist es weiterhin, wenn sich gemäß der Ansprüche 6 und 7 der Rand der Überdeckungen in deren wesentlichem Wirkbereich bogenförmig ausgebildet ist und sich von oberhalb der Bohrung für den Gelenkstift oder dergleichen auf der in Richtung der Wischstange weisenden Seite bogenförmig bis unterhalb der Bohrung für den Gelenkstift oder dergleichen erstreckt. Von dort aus kann der Rand dann nach unten verlaufen und mit einer Rundung in den unteren Rand der Seitenwangen des Befestigungsteiles übergehen. Durch diese Ausbildung der Überdeckung im Bereich des Schwenklagers wird die erforderlich große Stabilität der Konstruktion und die benötigte Seitenführung für das Gelenkteil mit Wischstange erreicht.

Die größte Sicherheit dafür, daß über den gesamten möglichen Abklappbereich des Wischarmes, d.h. des möglichen Schwenkbereiches des Gelenkteiles mit Wischstange gegenüber dem Befestigungsteil bei am Fahrzeug angebautem Wischarm, keine unlackierten Bereiche der Seitenwangen des Gelenkteiles freigelegt werden können, ist dann gegeben, wenn gemäß Anspruch 9 der Rand der Überdeckungen kreisbogenförmig und konzentrisch zur Bohrung für den Gelenkstift oder dergleichen verläuft.

Anhand der Zeichnung wird nachfolgend ein Ausführungsbeispiel näher erläutert. In der Zeichnung zeigen:
- Figur 1 -: einen Wischarm in perspektivischer Darstellung und
- Figur 2 -: eine vergrößerte Darstellung aus dem Bereich des Schwenklagers 13 aus Figur 1.

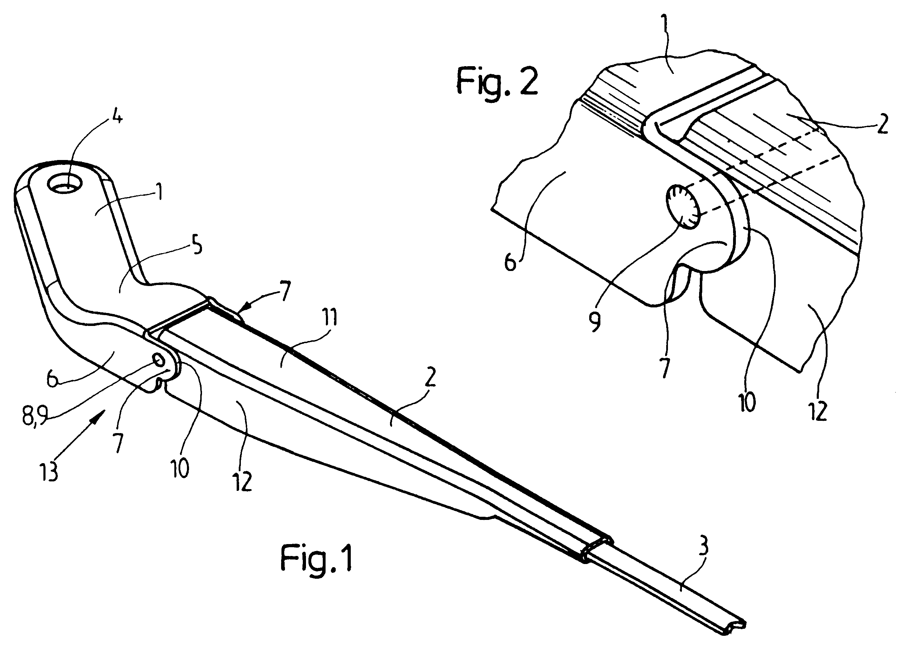

Der gesamte Wischarm ist zusammengesetzt aus einem Befestigungsteil 1 und einem Gelenkteil 2, an dem die Wischstange 3 befestigt ist. Die Wischstange 3 ist in Figur 1 gebrochen dargestellt, da allgemein bekannt ist, wie derartige Wischstangen 3 aussehen. Am nicht dargestellten Ende der Wischstange 3 ist das an sich bekannte Wischblatt anlenkbar.

Das befestigungsteil 1 ist aus Stahlblech, beispielsweise durch Tiefziehen, hergestellt. Es besitzt eine Öffnung 4 mit welcher das Befestigungsteil 1 auf einer pendelnd antreibbaren Welle zu befestigen ist. Insgesamt hat das Befestigungsteil 1 zumindest einen annähernd V-förmigen Querschnitt, wobei der Rücken 5 im wesentlichen senkrecht zur geometrischen Achse der Öffnung 4 verläuft und die Seitenwangen 6, wovon in der Zeichnung nur eine sichtbar ist, sich im wesentlichen vom Rücken 5 aus senkrecht nach unten erstrecken, d.h. auf die zu reinigende Scheibe gerichtet sind. An der der Öffnung 4 gegenüberliegenden Seite des Befestigungsteiles 1 ist der Rücken 5 etwas zurückgesezt, um die nötige Schwenkbarkeit des Gelenkteiles 2 zu gewährleisten.

In dem Bereich zwischen der Öffnung 4 und dem Schwenklager 13, welches Befestigungsteil 1 und Gelenkteil 2 schwenkbar miteinander verbindet, ist das Gelenkteil 1 seitlich abgebogen. Diese Abbiegung ist von den spezifischen geometrischen Verhältnissen des Fahrzeuges und von der Geometrie des Wischfeldes auf der Fahrzeugscheibe abhängig. Insgesamt ist der Rücken 5 des Befestigungsteiles 1 im wesentlichen über dessen gesamte Länge gleich breit und breiter als der Rücken 11 des Gelenkteiles 2. Dadurch erhält das Befestigungsteil 1 die erforderliche Stabilität und Festigkeit, was sich auch vorteilhaft auf die Stabilität des Schwenklagers 13 und des gesamten Wischarmes fortsetzt.

Die Seitenwangen 6 des Befestigungsteiles 1 überragen an der der Öffnung 4 gegenüberliegenden Seite den Rücken 5 in Richtung der Wischstange 3 und sind in diesem Bereich als runde Überdeckung 7 ausgebildet. In diese Überdeckungen ist gleichachsig jeweils eine Bohrung 8 eingebracht, welche einen Gelenkstift bzw. Gelenkniet 9 aufnimmt. Der Rand 10 der Überdeckung 7 umgibt die Bohrung 8 bogenförmig und zwar ausgehend von oberhalb der Bohrung 8 entlang der der Wischstange 3 zugewandten Seite der Bohrung 8 bis unterhalb der Bohrung 8. Von dort aus verläuft der Rand noch etwas nach unten und geht mit einer Rundung in den unteren Rand der Seitenwange 6 über.

Das Gelenkteil 2 ist im Querschnitt im wesentlichen ebenfalls V-förmig, wobei sich vom Rücken 11 die Seitenwangen 12 (in der Zeichnung ist nur eine Seitenwange 12 sichtbar) senkrecht nach unten erstrecken. Dieses Gelenkteil 2 ist ebenfalls aus Stahlblech hergestellt. An dem der Wischstange 3 gegenüberliegenden Ende des Gelenkteiles 2 ist in die Seitenwangen 12 ebenfalls jeweils eine, in der Zeichnung nicht sichtbare, gleichachsige Bohrung eingebracht. Dieses Ende des Gelenkteiles 2 ist mit seinen Seitenwangen 12 zwischen den runden Überdeckungen 7 angeordnet und zwar so, daß alle Bohrungen in den Seitenwangen 6,12 miteinander fluchten. In diesen Bohrungen ist ein Gelenkstift bzw. Gelenkniet 9 angeordnet, der somit die Achse des gebildeten Schwenklagers 13 ist.

Vorteilhafterweise ist in die Bohrungen des Gelenkteiles 2 eine durchgehende Lagerbuchse eingesetzt und drehfest mit dem Gelenkteil 2 verbunden. Der Gelenkstift bzw. Gelenkniet 9 ist somit innerhalb der Bohrungen 8 in den Seitenwangen 6 des Befestigungsteiles 1 und gleichzeitig innerhalb der Lagerbuchse angeordnet und drehfest mit dem Befestigungsteil 1 verbunden. Die Lagerbuchse ist also gemeinsam mit dem Gelenkteil 2 um den Gelenkstift bzw. Gelenkniet 9 drehbar. In bekannter Weise ist eine Zugfeder am Befestigungsteil 1 einerseits und am Gelenkteil 2 bzw. der Zugstange 3 andererseits direkt oder über Verbindungsglieder eingehängt und sorgt für die erforderliche Anpreßkraft des Wischblattes auf die zu reinigende Scheibe. Diese Sachverhalte sind aus der Zeichnung wegen der perspektivischen Darstellung nicht ersichtlich, aber aufgrund ihrer Einfachheit auch ohne zeichnerische Darstellung eindeutig und verständlich.

Dieser Wischarm kann unbeschadet erst nach seinem Zusammenbau lackiert werden, da auch beim Verschwenken des Gelenkteiles 2 gegenüber dem Befestigungsteil 1 im wesentlichen keine unter der runden Überdeckung 7 liegenden, unlackierten Bereiche der Seitenwangen 12 des Befestigungsteiles freigelegt bzw. sichtbar werden können.

### Bezugszeichenliste

- 1: Befestigungsteil
- 2: Gelenkteil
- 3: Wischstange
- 4: Öffnung
- 5: Rücken
- 6: Seitenwange
- 7: Überdeckung
- 8: Bohrung
- 9: Gelenkstift bzw. Gelenkniet
- 10: Rand
- 11: Rücken
- 12: Seitenwange
- 13: Schwenklager

## Patentansprüche

1. Wischarm, insbesondere für eine Scheibenreinigungsanlage eines Fahrzeuges, mit einem Befestigungsteil (1) zur Befestigung auf einer Wischerwelle, mit einem Gelenkteil (2), das mit dem Befestigungsteil (1) über ein Schwenklager (13) verbunden ist, und mit einer Wischstange (3) die an dem dem Schwenklager (13) abgewandten Ende des Gelenkteils (2) befestigt ist, wobei das Befestigungsteil (1) und das gelenkteil (2) aus Blech gefertigt sind und eine im wesentlichen U-artige Form mit einem Rücken (5,11) und vom Rücken (5,11) zur zu reinigenden Scheibe weisenden Seitenwangen (6,2) besitzt und wobei das Schwenklager (13) durch fluchtende Bohrungen (8) in den Seitenwangen (6,12) vom Befestigungsteil (1) und Gelenkteil (2) bzw. in Verlängerungen dieser Seitenwangen (6,12) gebildet ist, in welche ein Gelenkstift (9) oder dergleichen eingesetzt ist, dadurch **gekennzeichnet,** daß im Bereich des Schwenklagers (13) die Seitenwangen (12) des Gelenkteiles (2) bzw. die Verlängerungen dieser Seitenwangen (12) zwischen den Seitenwangen (6) des Befestigungsteiles (1) bzw. den Verlängerungen dieser Seitenwangen (6) angeordnet sind.

2. Wischarm nach Anspruch 1, dadurch **gekennzeichnet,** daß der Rücken (5) des Befestigungsteiles (1) im wesentlichen über die gesamte Länge des Befestigungsteiles (1) die gleiche Breite besitzt.

3. Wischarm nach Anspruch 1 oder 2, dadurch **gekennzeichnet,** daß sowohl das Befestigungsteil (1) als auch das Gelenkteil (2) aus Stahlblech gefertigt sind.

4. Wischarm nach einem der Ansprüche 1 bis 3, dadurch **gekennzeichnet,** daß in die fluchtenden Bohrungen (8) des Gelenkteiles (2) eine Lagerbuchse eingesetzt ist, welche eine relative Schwenkbewegung auf einem fest in den fluchtenden Bohrungen (8) des Befestigungsteiles (1) angeordneten Gelenkstift (9) oder dergleichen ausführen kann.

5. Wischarm nach einem der Ansprüche 1 bis 4, dadurch **gekennzeichnet,** daß im Bereich des Schwenklagers (13) die Seitenwangen (6) des Befestigungsteiles (1) bzw. die Verlängerung dieser Seitenwangen (6) in Bezug auf die Seitenwangen (12) des Gelenkteiles (2) bzw. die Verlängerungen dieser Seitenwangen (12) derart als Überdeckungen (7) ausgebildet sind, daß beim Hochklappen des Wischarmes von der zu reinigenden Scheibe im wesentlichen keine in der Ausgangslage des Wischarmes von den Überdeckungen (7) verdeckte Oberflächenbereiche der Seitenwangen (12) des Gelenkteiles (2) bzw. der Verlängerungen dieser Seitenwangen (12) sichtbar werden.

6. Wischarm nach Anspruch 5, dadurch **gekennzeichnet,** daß der Rand (10) der Überdeckungen (7) in deren wesentlichem Wirkbereich bogenförmig ausgebildet ist.

7. Wischarm nach Anspruch 6, dadurch **gekennzeichnet,** daß sich der Rand (10) der Überdeckungen (7) von oberhalb der Bohrung (8) für den Gelenkstift (9) oder dergleichen auf der in Richtung der Wischstange (3) liegenden Seite bogenförmig bis unterhalb der Bohrung (8) erstreckt.

8. Wischarm nach einem der Ansprüche 5 bis 7, dadurch **gekennzeichnet,** daß der Rand (10) der Überdeckungen (7) eine von der Kreisbogenform abweichende Bogenform besitzt.

9. Wischarm nach einem der Ansprüche 5 bis 7, dadurch **gekennzeichnet,** daß der Rand (10) der Überdeckungen (7) Kreisbogenform besitzt und der Kreisbogen konzentrisch zur Bohrung (8) für den Gelenkstift (9) oder dergleichen verläuft.

## Claims

1. A wiper arm, in particular, for a windscreen washer system of an automotive vehicle, comprising a mounting part (1) for mounting to a wiper spindle, a hinged part (2) connected to the mounting part (1) through a swivel bearing (13), and a wiper rod (3) which is secured to the end of the hinged part (2) facing away from the swivel bearing (13), with the mounting part (1) and the hinged part (2) being made of sheet metal and being of a substantially U-shaped configuration with a ridge (5,11) and lateral cheeks (6,2) directed from the ridge (5,11) to the window pane to be cleaned, and with the swivel bearing (13) being formed by aligning bores (8) provided within the lateral cheeks (6,12) of the mounting part (1) and the hinged part (2) or the extensions of the said lateral cheeks (6,12), respectively, in which is inserted a pivotable pin (9) or the like, characterized in that provided in the area of the swivel bearing (13) are the lateral cheeks (12) of the hinged part (2) or the extensions thereof, respectively, between the lateral cheeks (6) of the mounting part (1) or the extensions of the said lateral cheeks (6), respectively.

2. A wiper arm according to claim 1, characterized in that the ridge (5) of the mounting part (1) substantially throughout the entire length of the mounting part (1) is of the same width.

3. A wiper arm according to claims 1 or 2, characterized in that both the mounting part (1) and the hinged part (2) are made of steel plate.

4. A wiper arm according to any one of claims 1 to 3, characterized in that a bearing bushing is inserted into the aligning bores (8) of the hinged part (2) which can perform a relative swivel movement on a pivotable pin (9) or the like rigidly arranged within the aligning bores (8) of the mounting part (1).

5. A wiper arm according to any one of claims 1 to 4, characterized in that, in the area of the swivel bearing (13), the lateral cheeks (6) of the mounting part (1) or the extension of the said lateral cheeks (6), respectively, relative to the lateral cheeks (12) of the hinged part (2) or the extension thereof, respectively, are so formed as lappings (7) that when folding the wiper arm off the window pane to be cleaned substantially no surface areas of the lateral cheeks (12) of the hinged part (2) or the extension thereof, respectively, which, in the starting position of the wiper arm are masked by lappings (7), will become visible.

6. A wiper arm according to claim 5, characterized in that the edge (10) of the lappings (7), in the essential area of operation thereof, is of an arcuate configuration.

7. A wiper arm according to claim 6, characterized in that the edge (10) of the lappings (7) arcuately extends from above the bore (8) for the pivotable pin (9) or the like on the side facing the wiper rod (3), to underneath the bore (8).

8. A wiper arm according to any one of claims 5 to 7, characterized in that the edge (10) of the lappings (7) is of an arcuate configuration deviating from the circular arc-shape.

9. A wiper arm according to any one of claims 5 to 7, characterized in that the edge (10) of the lappings (7) is of a circular arc configuration and that the circular arc extends in a direction concentric to the bore (8) accommodating the pivotable pin (9) or the like.

## Revendications

1. Bras d'essuie-glace, notamment pour un système d'essuie-glace de véhicule, comprenant une pièce de fixation (1), servant à la fixation sur un arbre d'essuie-glace, une pièce articulée (2), qui est reliée à la pièce de fixation (1) par l'intermédiaire d'un palier de basculement (13), et une tige d'essuie-glace (3) qui est fixée à l'extrémité de la pièce articulée (2) située à l'opposé du palier de basculement (13), la pièce de fixation (1) et la pièce articulée (2) étant réalisées en tôle et présentant une forme essentiellement en U comportant un dos (5, 11) et des joues latérales (6, 12) dirigées vers la vitre à nettoyer à partir du dos (5, 11) et le palier de basculement (13) étant formé au moyen de perçages alignés (8) qui sont ménagés dans les parois latérales (6, 12) de la pièce de fixation (1) et de la pièce articulée (2) ou dans des parties de prolongement de ces parois latérales (6, 12) et dans lesquels une broche d'articulation (9) ou analogue est montée, caractérisé en ce que, dans la zone du palier de basculement (13), les joues latérales (12) de la pièce articulée (2) ou les parties de prolongement de ces joues latérales (12) sont disposées entre les joues latérales (6) de la pièce de fixation (1) ou les parties de prolongement de ces joues latérales (6).

2. Bras d'essuie-glace suivant la revendication 1, caractérisé en ce que le dos (5) de la pièce de fixation (1) présente essentiellement la même largeur sur toute la longueur de la pièce de fixation (1).

3. Bras d'essuie-glace suivant la revendication 1 ou 2, caractérisé en ce que la pièce de fixation (1) et la pièce articulée (2) sont réalisées l'une et l'autre en tôle d'acier.

4. Bras d'essuie-glace suivant l'une des revendications 1 à 3, caractérisé en ce qu'un manchon de palier est monté dans les perçages alignés (8) de la pièce articulée (2), ce manchon de palier pouvant exécuter un mouvement relatif de basculement sur une broche d'articulation (9) ou analogue disposée de manière fixe dans les perçage alignés (8) de la pièce de fixation (1).

5. Bras d'essuie-glace suivant l'une des revendications 1 à 4, caractérisé en ce que, dans la zone du palier de basculement (13), les joues latérales (6) de la pièce de fixation (1) ou les parties de prolongement de ces joues latérales (6) sont réalisées, par rapport aux joues latérales (12) de la pièce articulée (2) ou aux parties de prolongement de ces joues latérales (12), de façon à former des parties de recouvrement (7), d'une manière telle que, lors du relèvement du bras d'essuie-glace de dessus la vitre à nettoyer, essentiellement aucune zone superficielle des joues latérales (12) de la pièce articulée (2), ou des parties de prolongement de ces joues latérales (12), qui est recouverte par une partie de recouvrement (7) dans la position initiale du bras d'essuie-glace ne devient visible.

6. Bras d'essuie-glace suivant la revendication 5, caractérisé en ce que le bord (10) des parties de recouvrement (7) est, dans la zone essentiellement active de celles-ci, en forme d'arc.

7. Bras d'essuie-glace suivant la revendication 6, caractérisé en ce que le bord (10) des parties de recouvrement (7) s'étend d'au-dessus du perçage (8) prévu pour la broche d'articulation (9) ou analogue, en forme d'arc sur le côté situé vers la tige d'essuie-glace (3), jusqu'au dessous du perçage (8).

8. Bras d'essuie-glace suivant l'une des revendications 5 à 7, caractérisé en ce que le bord (10) des parties de recouvrement (7) possède une forme en arc s'écartant de la forme en arc de cercle.

9. Bras d'essuie-glace suivant l'une des revendications 5 à 7, caractérisé en ce que le bord (10) des parties de recouvrement (7) possède une forme en arc de cercle et l'arc de cercle s'étend d'une manière concentrique au perçage (8) prévu pour la tige d'articulation (9) ou analogue.
